Europäisches Patentamt

European Patent Office

Office européen des brevets

(11) Publication number: **0 142 334**
**B1**

# (12) EUROPEAN PATENT SPECIFICATION

(45) Date of publication of patent specification: **19.10.88**   (51) Int. Cl.⁴: **C 04 B 37/02, F 01 D 5/04**

(21) Application number: **84307722.3**

(22) Date of filing: **08.11.84**

(54) A metal-ceramic composite body and a method of manufacturing the same.

(30) Priority: **09.11.83 JP 209226/83**

(43) Date of publication of application:
**22.05.85 Bulletin 85/21**

(45) Publication of the grant of the patent:
**19.10.88 Bulletin 88/42**

(84) Designated Contracting States:
**AT CH DE FR GB IT LI NL SE**

(56) References cited:
**DE-A-2 734 747**
**DE-A-2 845 716**
**FR-A-2 234 475**

(73) Proprietor: **NGK INSULATORS, LTD.**
**2-56, Suda-cho, Mizuho-ku**
**Nagoya-shi, Aichi 467 (JP)**

(72) Inventor: **Tsuno, Nobuo**
**3-6 Iwanaridai 8-chome**
**Kasugai City (JP)**
Inventor: **Ishida, Yoshihiko**
**17 Aza-Toride Narumi-Cho**
**Midori-Ku Nagoya City (JP)**

(74) Representative: **Paget, Hugh Charles Edward et al**
**MEWBURN ELLIS & CO. 2/3 Cursitor Street London EC4A 1BQ (GB)**

Courier Press, Leamington Spa, England.

## Description

The present invention relates to a metal-ceramic comopsite body and a method of manufacturing the same.

Since ceramics such as zirconia, silicon nitride, silicon carbide and the like have excellent mechanical strength, thermal resistance and wear resistance, ceramics are now being put forward as high temperature structural materials such as gas turbine engine parts, diesel engine parts and so on, and as wear resistant materials. However, because ceramics are generally hard and brittle, they are inferior to metals in formability and workability. It is difficult to form mechanical parts such as engine parts from the ceramic material alone due to its poor toughness. Therefore, ceramic materials are generally used in a form of a composite structural body in which a metallic member and a ceramic member are bonded together.

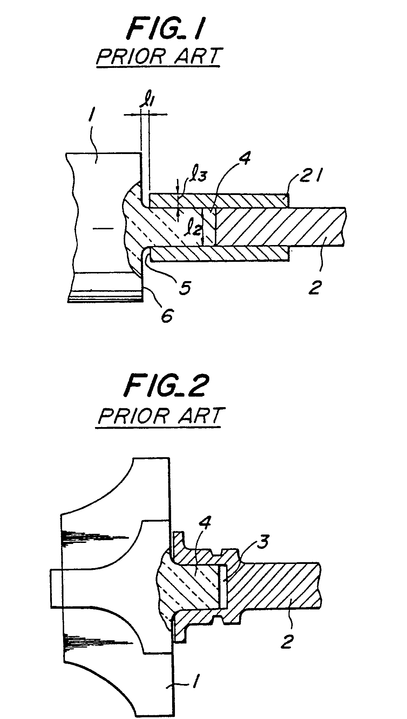

Known methods by which the metallic member and the ceramic member of the metal-ceramic composite body used as an engine part are mechanically bonded together, are, for instance, a structure in which a rotary shaft 1 of a ceramic turbine wheel and a rotary shaft 2 of a metal compressor wheel are bonded together by shrinkage fitting a metallic cylindrical collar 21 around the outer periphery thereof as shown in accompanying Fig. 1 (JP—A— Laid-Open No. 200,601/ 1982) and a structure in which a rotary shaft 4 of a turbine wheel made of ceramics is fitted into a recess 3 formed at the end of a rotary shaft 2 of a metal compressor wheel as shown in Fig. 2 (U.S.—A—3,666,302).

However, these known bonding structures have the following defects:

(1) Since the thickness of the metallic member at the bonding portion is large, a large stress concentration occurs at a portion of the ceramic member at which the ceramic member is inserted into the metallic member. Thus, in the metal-ceramic composite body shown in Fig. 1, since the outer diameter of the composite body changes at an edge 5 of the metal collar 21 to cause discontinuous change in rigidity, when a tensile load or a bending load is applied to the composite body, stress concentrates in the portion of the ceramic member near the edge of the metal collar, and fracture begins to occur from this portion.

(2) In the structure shown in Fig. 1, since a space $l_1$ between the back surface 6 of the large diameter portion of the ceramic member and the edge surface 5 of the metallic member is small, when a bending load is applied to the bonding portion, stress is concentrated upon the ceramic member at the space $l_1$, so that fracture occurs from this portion, similar defects arise in the structure shown in Fig. 2.

It is therefore an object of the present invention to provide a metal-ceramic composite body of a structure in which the stress concentration in the ceramic member due to a bending load is small, thereby to increase the sterngth of the whole composite body.

It is another object of the invention to provide a method of manufacturing such a metal-ceramic composite body.

The invention is set out in the claims.

Embodiments of the invention will now be described by way of non-limitative example with reference to the accompanying drawings, wherein:

Figs. 1 and 2 (already referred to) are schematic longitudinal sectional views of known metal-ceramic composite bodies;

Figs. 3, 5 and 6 are schematic longitudinal sectional views of respective metal-ceramic composite bodies embodying the invention;

Fig. 4 is a schematic view illustrating one example of the method of manufacturing a metal-ceramic composite body according to the invention;

Fig. 7 is a schematic longitudinal sectional view of a tappet structure in which a metal-ceramic composite body embodying the invention is used in combination with another metallic member;

Fig. 8 is a schematic longitudinal sectional view of a joint portion of a turbocharger rotor embodying the invention;

Fig. 9 is a schematic view illustrating a bending test of a metal-ceramic body according to the invention;

Fig. 10 is a graph showing the relation between a certain dimension of the metal-ceramic body and the bending strength;

Fig. 11 is a graph showing the relation between the thickness of the tip edge of the metallic member and the bending strength;

Fig. 12 is a graph showing the relation between the length of the tapering portion of the metallic member and the bending strength;

Fig. 13 is a graph showing the relation between the radius of curvature of the tapering portion of the metallic member and the bending strength; and

Fig. 14 is a graph showing the relation between the radius of curvature of a tapering portion of the ceramic member and the bending strength.

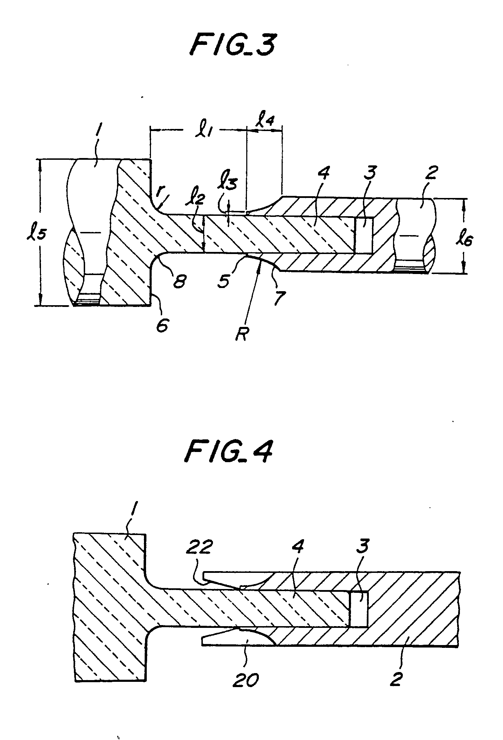

Fig. 3 shows metal-ceramic composite body embodying the invention in which a small diameter portion 4 of diameter $l_2$ provided on a ceramic member 1 is fitted into a recess 3 formed in a metallic member 2 in such a manner that a gap of length $l_1$ is present between the end surface 5 of the metallic member and the back surface 6 of the large diameter portion of the ceramic member, and the thickness of the end portion 7 of the metallic member closest to the ceramic member is gradually reduced toward the tip or end 5 with its outer surface concavely curved with radius R of curvature as seen in longitudinal (axial) section, i.e. as seen in Fig. 3.

The size of the gap $l_1$ is preferably not less than the diameter $l_2$. In order to prevent stress concentration in the ceramic member in the vicinity of the end 5 of the tapering portion 7, the radius of the curvature R around the recess of the metallic

member, the thickness $l_3$ (i.e. the wall thickness) at the end 5 of the tapering portion 7 and the length $l_4$ of the tapering portion 7 are preferably respectively not less than 0.4 times, not more than 0.2 times and not less than 0.5 times the diameter $l_2$ of the small diameter portion of the ceramic member. The engagement between the recess 3 and the small diameter portion 4 of the ceramic member may be achieved by either shrinkage fitting or press fitting.

Since the gap $l_1$ between the end 5 of the metallic member and the back surface 6 of the large diameter portion of the ceramic member is not narrower than the diameter $l_2$ of the small diameter portion of the ceramic member, a bending load imposed upon the composite body is supported by the ceramic member over the whole length of the portion corresponding to the gap $l_1$, so that no stress concentration occurs. If $l_1$ is smaller than the diameter $l_2$, a bending load is supported by too short portion of the ceramic member causing high stress concentration, so that the small diameter portion 4 is fractured under application of a relatively low bending load. Furthermore, because of the gradual reduction of the thickness of the end portion 7 towards the ceramic member, and the relationship between the radius of curvature R, the diameter $l_2$, the thickness $l_3$ and the length $l_4$ given above the change in the outer diameter of the composite body at this end 5 of the metallic member is mild. Therefore, stress concentration at this region is small.

If the thickness of the end portion of the metallic member is not gradually reduced towards the ceramic member, the outer diameter of the composite body changes sharply at the end 5 of the metallic member causing discontinuous variation of the rigidity thereof, so that the stress concentrates on the ceramic member at this region, and the ceramic member is fractured even under a low load.

When making this metal-ceramic composite body, the thickness of the end portion of the metallic member where it is engaged with the ceramic member may be reduced after the engagement.

When the diameter $l_2$ is small and accordingly the thickness $l_3$ at the tip of the metallic member is very small, it is difficult to process the tip so that the thickness $l_3$ is not larger than 0.2 times the diameter $l_2$ before the engagement between the metallic member and the ceramic member. The tapering portion 7 of the metallic member is liable to be bent inside during the processing, thereby preventing the succeeding engagement with the ceramic member. Thus, it may be necessary to effect the processing to reduce the thickness of the portion 7 after the engagement.

Fig. 4 shows a way of making a metal-ceramic composite body embodying the invention, in which the inlet portion (mouth) of the recess 3 of the metallic member 2 is preliminarily provided with an internal taper portion 22 to facilitate the insertion of the portion 4 of the ceramic member by shrinkage fitting, press fitting, etc. After the portion 4 of the ceramic member 1 has been fitted into the recess 3 the end portion 20 (shown unhatched) of the metallic member is cut off to obtain the tapering portion 7 as shown in Fig. 3. Moreover, depending upon necessity, the surface of the metallic member is hardened by surface quenching, nitrification treatment, hard plating or the like.

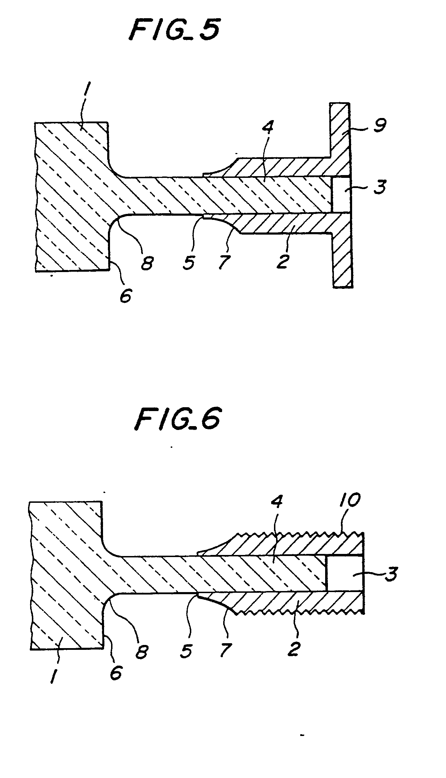

Fig. 5 shows a metal-ceramic composite body embodying the invention in which the small diameter portion 4 of the ceramic member 1 is fitted into the recess 3 of a cylindrical metallic member having at its end a flange 9 larger in diameter than the diameter of the barrel portion 2. The metal-ceramic composite body can be joined to another metallic member by way of this flange 9.

Fig. 6 shows a metal-ceramic composite body in which the small diameter portion 4 of the ceramic member 1 is fitted into a recess 3 of the cylindrical metallic member 2 having an exterior threaded portion 10 by which another metallic member can be assembled onto the metal-ceramic composite body of the invention.

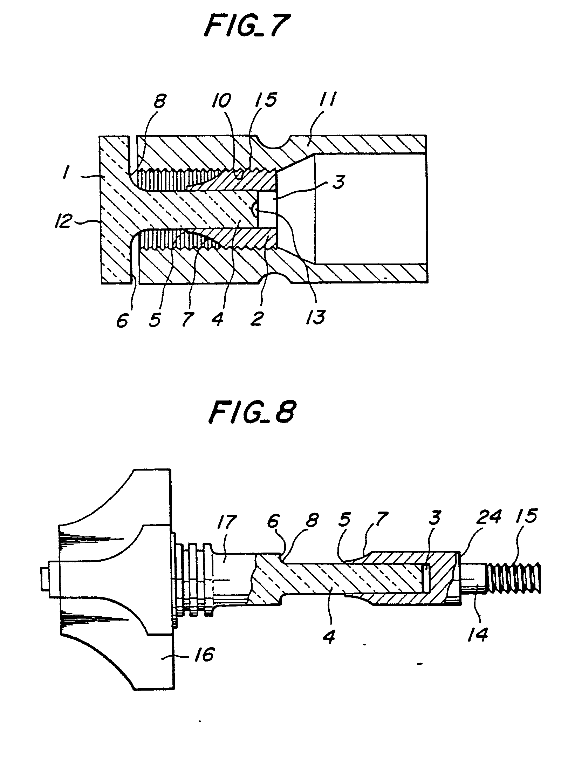

In Fig. 7 is shown a tappet having a cam-sliding surface 12 and a push rod-contact surface 13 both made of ceramics. A through-hole is bored in the cam-sliding surface of the tappet body 11, and the metal-ceramic composite body 1,2 of the invention is fixed to the tappet body 11 by means of an interior threaded portion 15 of the through hole and the exterior threaded portion 10 of the metallic member 2.

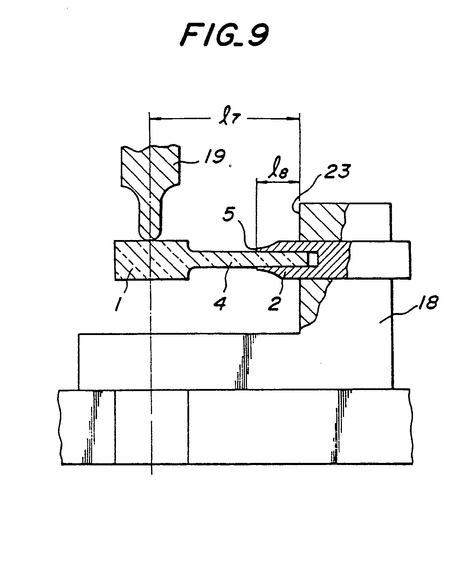

Fig. 8 is a turbocharger rotor as another specific example of the metal-ceramic composite body according to the present invention, in which the small diameter portion 4 of the end of a rotary shaft 17 formed monolithically with a turbine wheel 16 of ceramic material is fitted into the recess 3 formed in the end portion of a steel rotary shaft 14 on the side of a compressor wheel.

Next, the reasons for the limitations placed on dimensions in embodiments of the present invention will be explained on the basis of test results.

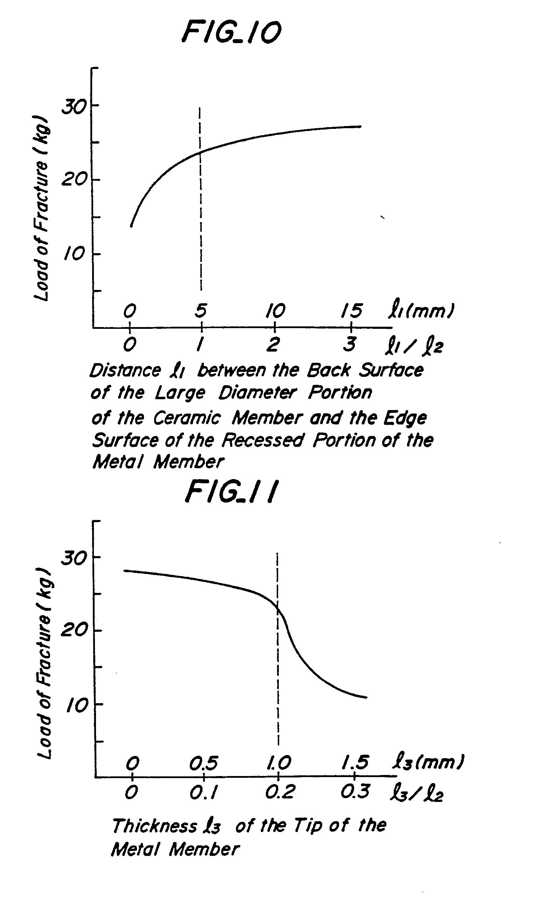

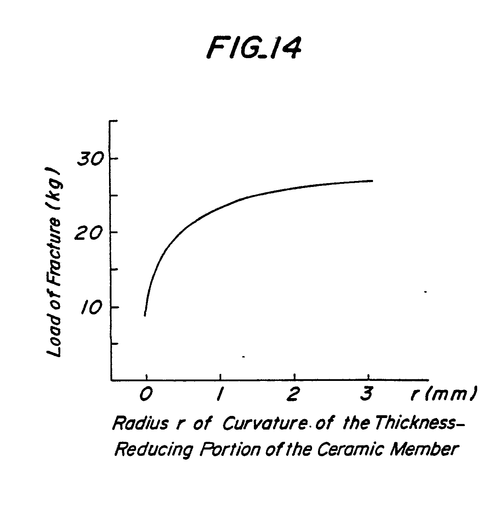

As a test piece there was used a metal-ceramic composite body having the profile shown in Fig. 3 in which the ceramic member 1 was of silicon nitride having the large diameter portion of diameter $l_5 = 9$ mm, the small diameter portion 4 of diameter $l_2 = 5$ mm, the radius r of curvature of the transition of the ceramic member from the large diameter portion to the small diameter portion 4 given by $r = 0 \sim 3$ mm, and the small diameter portion 4 of total length 30 mm. The metallic member 2 was made of an annealed chromium-molybdenum steel (JIS-SCM 435) of diameter $l_6 = 9$ mm. This test piece was subjected to the bending test by using a device shown in Fig. 9 in which the span $l_7$ was 40 mm and the distance $l_8$ between the fixed end 23 of the test block and the end 5 of the metallic member was 15 mm. In the various tests whose results are shown in Figs. 10—13, the ceramic members used had the radius of the curvature r fixed at 2 mm. In the test whose results are shown in Fig. 14, the ceramic members used had radius of curvature r varied in the range of 0~3 mm.

In Fig. 10 are shown results of the bending test when the length of the gap $l_1$ was varied while the thickness $l_3$, the length $l_4$ and the radius of curvature R were set at 1 mm, 2.5 mm and 2 mm respectively. The bending load of the ceramic member is the ordinate, as in each of Figs. 10 to 14, whereas the gap $l_1$ is the abscissa. Fig. 10 shows that the bending load ("load of fracture") required for fracture of the ceramic member increases with $l_1$, and approaches a constant value when the gap $l_1$ exceeds the diameter $l_2$. When the length $l_v$ is smaller than the $l_\square$, the load causing the fracture of the ceramic member rapidly reduces due to stress concentration. Therefore, the length of the gap $l_1$ should preferably not be smaller than the diameter $l_2$.

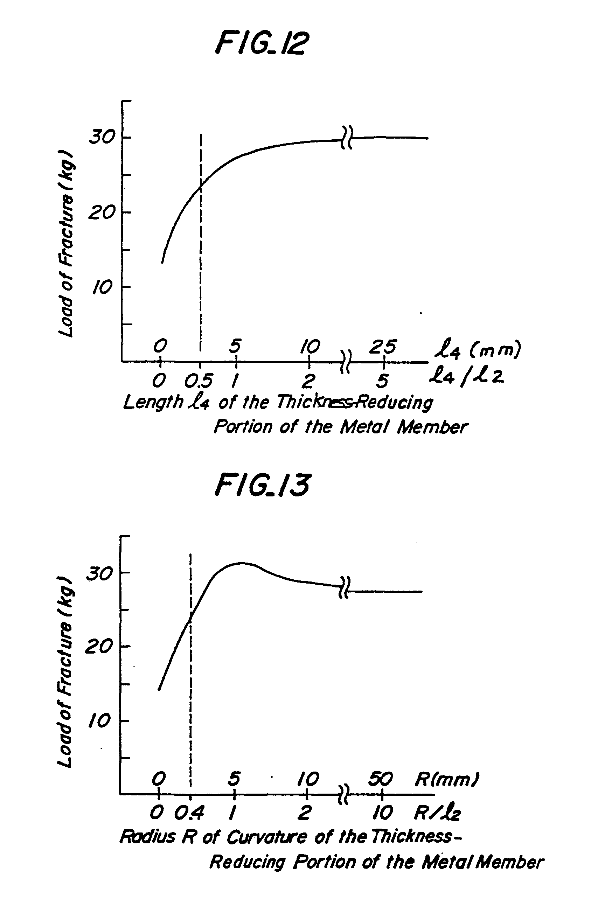

In Fig. 11 are shown the results of the bending test when the wall thickness $l_3$ of the tip of the metallic member was varied while the length $l_4$ was 2.5 mm, the radius of curvature R was 2 mm, and the gap $l_1$ was 5 mm, the thickness $l_3$ being the abscissa coordinate. Fig. 11 shows that the larger the thickness $l_3$ of the tip of the metallic member, the smaller the load of fracture of the ceramic member. When the thickness $l_3$ exceeds 0.2 times $l_2$, the load of fracture abruptly lowers. Therefore, the thickness $l_3$ is preferably not larger than 0.2 times the diameter $l_2$.

Fig. 12 shows results of the bending test when the length $l_4$ of the tapering portion of the metallic member was varied while the thickness $l_3$ was 1 mm, the radius of curvature R was 2 mm, the gap $l_1$ was 5 mm. The length $l_4$ is the abscissa coordinate. As is clear from Fig. 12, the larger the length $l_4$, the larger the load of fracture on bending. When the length $l_4$ exceeds 0.5 times the diameter $l_2$ of the small diameter portion of the ceramic member, the load of fracture approaches a constant value. However, when $l_4$ is not larger than 0.5 times $l_2$, the load of fracture rapidly reduces. Therefore, the length $l_4$ is preferably not smaller than 0.5 times $l_2$.

Fig. 13 shows the bending test results when the exterior radius of the curvature R of the tapering portion at the end of the metallic member was varied while the gap $l_1$ was 5 mm, the thickness $l_3$ was 1 mm, and the length $l_4$ was 2.5 mm. The radius of curvature R is the abscissa coordinate. As is clear from Fig. 13, when R is not larger than 0.4 times the diameter $l_2$, the load of fracture rapidly drops, whereas when it is not lower than 0.4 times $l_2$, the load of fracture is substantially constant. Therefore, the radius of curvature R is preferably not smaller than 0.4 times the diameter $l_2$.

Finally, in Fig. 14 there are shown the results of the bending test when the radius of curvature r of the transition region portion from the large diameter portion to the small diameter portion of the ceramic member was varied, while the gap $l_1$ was 5 mm, the thickness $l_3$ was 1 mm, the length $l_4$ was 2.5 mm and the radius of curvature R was 2 mm. The radius of curvature r is the abscissa coordinate respectively. Fig. 14 shows that when no transition portion is present at the junction of the large diameter portion to the small diameter portion of the ceramic member (i.e. r is zero), the load of fracture is extremely low. Therefore, it is preferable that this thickness-reducing transition portion is provided, i.e. r is greater than 0.

The ceramic material used in the metal-ceramic composite body according to the invention, may for example be made of silicon nitride, silicon carbide, partially stabilized zirconia, alumina, beryllia and the like, depending upon the intended use of the metal-ceramic composite body. For instance, in a metal-ceramic turbocharger rotor, it is preferable that the turbine wheel, which is subjected to high temperature, and the rotary shaft connected thereto are made of silicon nitride which has high temperature strength. In the tappet having the cam-sliding surface being made of ceramics according to the invention, partially stabilized zirconia having high strength and high toughness is preferred as the ceramic material.

The sectional profile of the thickness-reducing portion 7 (tapering portion) of the end portion of the recessed portion of the metallic member is not limited to the circular arc shape shown in the Figures, and may be, for instance, a quadratic curve or the like, such as a parabolic or elliptical curve, so long as the radius of curvature at every point on the curve is not smaller than 0.4 times the diameter $l_2$ of the small diameter portion of the ceramic member. Furthermore, the profile of the thickness-reducing portion 7 may be in a linear form which corresponds to the case in which the radius of curvature is infinite.

Next, specific examples of the invention will be given below. They are illustrative of the invention and not restrictive.

Example 1

A ceramic round bar of 9.0 mm outer diameter and 60.0 mm length was prepared from silicon nitride by sintering under ordinary pressure. A projection 5.0 mm in outer diameter and 40.0 mm in length was formed at one end of the bar to form a large diameter portion and a small diameter portion, with the diameter of the small diameter portion at the root thereof gradually increasing towards the large diameter portion at a radius of curvature of 1.0 mm. At one end of a round bar made of aluminum chromium molybdenum steel (JIS-SACM 645) of 50.0 mm total length and 9.0 mm outer diameter there was formed a recess 4.98 mm in inner diameter and 45.0 mm in depth to form a metallic member. This metallic member was shrinkage-fitted to the small diameter portion of the ceramic member at 500°C. In this manner the following two metal-ceramic composite bodies were prepared as test pieces.

Test piece A was a metal-ceramic composite body having the features of the present invention. The shrinkage-fitting was performed so that the distance between the end surface of the large diameter portion of the ceramic member and the end surface of the recessed portion of the metallic member was 15.0 mm. The end portion of the metallic member was processed after the shrinkage-fitting so that its wall thickness gradually reduced towards the ceramic member with a radius of curvature of 5.0 mm (as seen in longitudinal section) and the length of this tapering portion and the wall thickness at the tip of the tapering portion were 4.0 mm and 0.05 mm respectively.

Test piece B was a metal-ceramic composite body which did not satisfy the features of the invention. The shrinkage fitting was performed so that the distance between the end surface of the large diameter portion of the ceramic body and the opposed end surface of the metallic member was 0.05 mm. No tapering portion was formed at the metallic member at the bonding portion.

The test pieces A and B were subjected to a bending test by means of the bending test device shown in Fig. 9. The conditions of the bending test, see Fig. 9, were that the span $l_7$ was 40.0 mm, the distance $l_8$ between the end face 23 of the fixed member and the end 5 of the metallic member was 15.0 mm, and the loading speed was 0.05 mm/sec.

In the bending test, while the load of fracture of the test piece A was 32.0 kg, that of the test piece B was 12 kg. The metal-ceramic composite body embodying the invention was clearly superior to the conventional one, in terms of the bending strength.

Example 2

A turbine wheel 61.0 mm in outer diameter and a turbine shaft 9.0 mm in diameter were integrated with silicon nitride by sintering under ordinary pressure to prepare a ceramic member of 72.0 mm in total length. A projection of 6 mm in diameter and 20.0 mm in length was formed at the tip of the turbine shaft portion, a region gradually reducing in diameter at a radius of curvature of 1.0 mm being formed at the root portion thereof, to form a small diameter portion and a large diameter portion. A recess of 5.8 mm in inner diameter and 14.0 mm in depth was formed at one end of an aluminum-molybdenum steel (JIS-SACM 645) rod 60.0 mm in total length and 9.0 mm in diameter. The small diameter portion of the turbine shaft was forceably inserted into the recess at 350°C so that the gap length between the end surface of the metallic bar and the opposed surface of the large diameter portion of the shaft was 10.0 mm. Thereafter, the end portion of the metallic member was processed so that its wall thickness gradually reduces toward the ceramic member at a radius of curvature of 6.0 mm, the length of the thickness-reducing portion being 4.0 mm, and the wall thickness at the tip being 0.05 mm.

The metallic rotary shaft portion of the turbocharger rotor on the side of the compressor wheel was processed to form a portion 14 of 5.0 mm in diameter, as shown in Fig. 8. On this rotary shaft portion 14 there was fitted a cylinder made of aluminum alloy (JIS-AC4C) having 5.2 mm inner diameter, 30.0 mm outer diameter and 25.0 mm length, which was fixed between a flange 24 and a threaded portion 15 at the end of the rotary shaft on the side of compressor wheel, using a nut at a tightening torque of 15 kg · cm. This turbocharger rotor was assembled into high temperature rotary test equipment, and was subjected to a rotary test at 150,000 rpm for one hour using a combustion gas. In this test, no abnormality was observed.

As appears from the foregoing, in metal-ceramic composite bodies of the present invention, stress concentration is reduced or avoided when bending load is applied. Thus, these metal-ceramic composite bodies can tolerate the larger load than the conventional structures. If the acting load applied in practice is not changed, the metal-ceramic composite body of the invention can be designed to be smaller than the conventional body.

In particular, in the case of the turbocharger rotor in which a metal-ceramic composite body according to the present invention is formed by connecting a metal shaft portion onto the assembly of ceramic turbine wheel and ceramic shaft, since the turbine is light in weight and has excellent strength at a high temperature, a turbocharger rotor with the high efficiency can be obtained.

Furthermore, in the case of a tappet, the sliding surface to the cam can be made of ceramics, by insertion of a metal-ceramic composite body according to the present invention. A tappet with excellent wear resistance can thus be obtained.

As described above, metal-ceramic composite bodies according to the present invention can be used as such, or in combination with another metallic member, as engine parts such as turbocharger, piston, tappet, suction valve, exhaust valve, rocker arm, cam and the like, and as structural body parts which are repeatedly subjected to high temperature and loading. Use can thus be made of the thermal resistance, heat insulating resistance, weight reduction, and acid resistance and high temperature strength of the ceramics.

**Claims**

1. A metal-ceramic composite body wherein a ceramic member (1) has a projection (4) of relatively small diameter extending from a relatively large diameter portion, the projection (4) being inserted into a recess (3) or through hole in a metallic member (2), characterised in that a gap ($l_1$) of length not less than the diameter ($l_2$) of the projection (4) is provided between the end (5) of the metallic member facing towards the ceramic member at the connection region and the opposed surface (6) of the large diameter portion of the ceramic member, and the thickness of the end portion of the metallic member gradually reduces, to form a tapering portion (7), towards the ceramic member with a radius of curvature (R) as seen in longitudinal section of not less than 0.4 times the diameter ($l_2$) of the projection (4).

2. A metal-ceramic composite body according to claim 1, wherein the wall thickness of the tip (5) of the metallic member towards the ceramic member is not more than 0.2 times the diameter ($l_2$) of the projection (4).

3. A metal-ceramic composite body according to claim 1 or claim 2, wherein the length of the tapering portion (7) is not less than 0.5 times the diameter ($l_2$) of the projection (4).

4. A metal-ceramic composite body according to any one of claims 1 to 3, wherein the large diameter portion of the ceramic member gradually reduces in transverse sectional area towards the projection (4).

5. A metal-ceramic composite body according to any one of claims 1 to 4, wherein the ceramic member (1) is a part of a rotary shaft of a turbocharger rotor on the side of a turbine wheel, and the metallic member (2) is a part of a rotary shaft of the turbocharger rotor on the side of a compressor wheel.

6. A metal-ceramic composite body according to claim 5, wherein the ceramic member is made of silicon nitride.

7. A metal-ceramic composite body according to any one of claims 1 to 4, wherein the ceramic member (1) is a part of a cam sliding portion of a tappet, and the metallic member is a part of a body portion of the tappet or is a member adapted to be connected with the tappet body portion.

8. A method of manufacturing a metal-ceramic composite body according to any one of claims 1 to 7 wherein the metallic member (2) and the ceramic member (1) are joined together by fitting a projection (4) provided on the ceramic member to a recess (3) or through hole of the metallic member, comprising the steps of:

(a) fitting the ceramic member to the metallic member in a manner such that a gap not narrower than the diameter of the projection (4) is provided between the end surface of the metallic member facing the ceramic member at the joint portion and the opposed surface of the large diameter portion of the ceramic member;

(b) working the metallic member to reduce the thickness of the end portion of the metallic member, to form portion (7) tapering towards the ceramic member and having a radius of curvature (R) as seen in longitudinal section not less than 0.4 times the diameter of the projection, the length of the tapering portion and the thickness of the tip thereof being respectively not less than 0.5 times and not larger than 0.2 times the diameter of the projection (4).

**Patentansprüche**

1. Zusammengesetzter Gegenstand aus Metall-Keramik, worin ein Keramikelement (1) einen Vorsprung (4) von verhältnismäßig geringem Durchmesser aufweist, der sich von einem Abschnitt mit verhältnismäßig großem Durchmesser aus erstreckt und der Vorsprung (4) in eine Ausnehmung (3) oder ein durchgehendes Loch in einem Metallelement (2) eingesetzt ist, dadurch gekennzeichnet, daß ein Spalt ($l_1$) von einer Länge, die nicht geringer ist als der Durchmesser ($l_2$) des Vorsprungs (4), zwischen dem Ende (5) des Metallelementes, das dem Keramikelement im Verbindungsbereich zugewandt ist, und der gegenüberliegenden Fläche (6) des Abschnittes mit großem Durchmesser des Keramikelementes vorgesehen ist und daß sich die Dicke des Endabschnittes des Metallelementes allmählich verringert, um einen Abschnitt (7) zu bilden, der sich auf das Keramikelement zu mit einem Krümmungsradius (R) betrachtet im Längsschnitt von nicht weniger als dem 0,4-fachen des Durchmessers ($l_2$) des Vorsprungs (4) verjüngt.

2. Zusammengesetzter Gegenstand aus Metall-Keramik nach Anspruch 1, worin die Wanddicke der Spitze (5) des Metallelementes auf das Keramikelement zu nicht mehr als das 0,2-fache des Durchmessers ($l_2$) des Vorsprungs (4) beträgt.

3. Zusammengesetzter Gegenstand aus Metall-Keramik nach Anspruch 1 oder 2, worin die Länge des verjüngten Abschnittes (7) nicht weigner als das 0,5-fache des Durchmessers ($l_2$) des Vorsprungs (4) beträgt.

4. Zusammengesetzter Gegenstand aus Metall-Keramik nach einem der Ansprüche 1 bis 3, worin der Abschnitt mit großem Durchmesser des Keramikelementes in seiner Querschnittsfläche auf den Vorsprung (4) zu allmählich abnimmt.

5. Zusammengesetzter Gegenstand aus Metall-Keramik, nach einem der Ansprüche 1 bis 4, worin das Keramikelement (1) ein Teil einer rotierenden Welle eines Turbolader-Rotors auf der Seite eines Turbinenrades ist und das Metallelement (2) ein Teil einer rotierenden Welle des Turboladerrotors auf der Seite eines Verdichterrades ist.

6. Zusammengesetzter Gegenstand aus Metall-Keramik nach Anspruch 5, worin das Keramikelement aus Siliziumnitrid hergestellt ist.

7. Zusammengesetzter Gegenstand aus Metall-Keramik nach einem der Ansprüche 1 bis 4, worin das Keramikelement (1) ein Teil eines Nockengleitabschnittes eines Ventilstößels ist und das Metallelement ein Teil eines Körperabschnittes des Ventilstößels oder ein Element ist, das dazu ausgebildet ist, mit dem Ventilstößelkörperabschnitt verbunden zu werden.

8. Verfahren zur Herstellung eines zusammengesetzten Gegenstandes aus Metall-Keramik nach einem der Ansprüche 1 bis 7, worin das Metallelement (2) und das Keramikelement (1) aneinandergefügt werden, indem ein Vorsprung (4), der auf dem Keramikelement vorgesehen ist, in eine Ausnehmung (3) oder ein durchgehendes Loch im Metallelement eingepaßt wird, umfassend die Schritte:

(a) Einpassen des Keramikelementes in das Metallelement auf solche Weise, daß ein Spalt, der nicht enger ist als der Durchmesser des Vorsprungs (4), zwischen der Endfläche des Metallelementes, die dem Keramikelement im Verbindungsabschnitt zugewandt ist, und der gegenüberliegenden Fläche des Abschnitts mit großem Durchmesser des Keramikelementes vorgesehen wird;

(b) Bearbeiten des Metallelementes, um die Dicke des Endabschnittes des Metallelementes zu verringern und den Abschnitt (7) auszubilden, der sich auf das Keramikelement zu verjüngt und einen Krümmungsradius (R) betrachtet im Längsschnitt von nicht weniger als dem 0,4-fachen des Durchmessers des Vorsprungs aufweist, wobei die Länge des verjüngten Abschnitts und die Dicke der Spitze desselben jeweils nicht weniger als das 0,5-fache und nicht mehr als das 0,2-fache des Durchmessers des Vorsprungs (4) betragen.

**Revendications**

1. Corps composite métal-céramique dans lequel un élément céramique (1) comporte un élément faisant saillie (4) d'un diamètre relativement petit s'étendant d'une partie d'un diamètre relativement grand, l'élément faisant saillie (4) étant inséré dans un évidement (3) au dans un alésage traversant d'un élément métallique (2), caractérisé en ce que un jeu ou espace ($l_1$) d'une longueur pas plus petite que le diamètre ($l_2$) de l'élément faisant saillie (4) est prévu entre l'extrémité (5) de l'élément métallique faisant face vers l'élément céramique dans la région de liaison et la surface opposée (6) de la partie de grand diamètre de l'élément céramique, et l'épaisseur de la partie extrême de l'élément métallique diminuant graduellement, pour former une partie effilée (7), vers l'élément céramique avec un rayon de courbure (R) comme vu en section longitudinale qui ne fait pas moins que 0,4 fois le diamètre ($l_2$) de l'élément faisant saillie (4).

2. Corps composite métal-céramique selon la revendication 1, dans lequel l'épaisseur de paroi du bout (5) de l'élément métallique vers l'élément céramique n'est pas supérieure à 0,2 fois le diamètre ($l_2$) de l'élément faisant saillie (4).

3. Corps composite métal-céramique selon la revendication 1 ou 2, dans lequel le longueur de la partie effilée (7) n'est pas inférieure à 0,5 fois le diamètre ($l_2$) de l'élément faisant saillie (4).

4. Corps composite metal-céramique selon l'une des revendications 1 à 3, dans lequel la partie de grand diamètre de l'élément ceramique diminue graduellement dans une région de section transversale vers l'élément faisant saillie (4).

5. Corps composite métal-céramique selon l'une des revendications 1 à 4, dans lequel l'élément céramique (1) est une partie d'un arbre tournant d'un rotor de turbocompresseur du côté d'une roue de turbine, et l'élément métallique (2) est une partie d'un arbre tournant du rotor du turbocompresseur du côté d'une roue de compressseur.

6. Corps composite métal-céramique selon la revendication 5, dans lequel l'élément céramique est réalisé en nitrure de silicium.

7. Corps composite métal-céramique selon l'une des revendications 1 à 4, dans lequel l'élément céramique (1) est un composant d'une partie de coulissement formant came d'un poussoir de soupape, et l'élément métallique est un composant d'une partie du corps du poussoir de soupape ou est un élément adapté à être relié avec la partie de corps du poussoir de soupape.

8. Procédé de fabrication d'un corps composite métal-céramique selon l'une des revendications 1 à 7, dans lequel l'élément métallique (2) et l'élément céramique (4) sont reliés ensemble par ajustement d'un élément faisant saillie (4) pourvu sur l'élément céramique dans un évidement (3) ou dans un alésage traversant de l'élément métallique, comportant les étapes suivantes:

a) ajuster l'élément céramique sur l'élément métallique de telle sorte qu'un espace ou jeu pas plus étroit que le diamètre de l'élément faisant saillie (4) soit prévu entre la surface extrême de l'élément métallique faisant face à l'élément céramique à la partie de liaison et la surface opposée de la partie de grand diamètre de l'élément céramique.

b) façonner l'élément métallique pour réduire l'épaisseur de la partie extrême de l'élément métallique, pour former une partie (7) effilée vers l'élément céramique et comportant un rayon de courbure (R) comme vu en section longitudinale pas inférieur à 0,4 fois le diamètre de l'élément faisant saillie, la longueur de la partie effilée et l'épaisseur du bout de celle-ci n'étant respectivement pas inférieures à 0,5 fois et pas supérieures à 0,2 fois le diamètre de l'élément faisant saillie (4).

# FIG_1
## PRIOR ART

# FIG_2
## PRIOR ART

## FIG_3

## FIG_4

## FIG. 5

## FIG. 6

## FIG_7

## FIG_8

# FIG_9

# FIG.10

Distance $l_1$ between the Back Surface
of the Large Diameter Portion
of the Ceramic Member and the Edge
Surface of the Recessed Portion of the
Metal Member

# FIG.11

Thickness $l_3$ of the Tip of the
Metal Member

0 142 334

## FIG_12

Load of Fracture (kg)

30

20

10

0    5    10    25    $\ell_4$ (mm)

0  0.5  1    2    5    $\ell_4 / \ell_2$

Length $\ell_4$ of the Thickness-Reducing
Portion of the Metal Member

## FIG_13

Load of Fracture (kg)

30

20

10

0    5    10    50   R(mm)

0  0.4  1    2    10   $R / \ell_2$

Radius R of Curvature of the Thickness-
Reducing Portion of the Metal Member

7

## FIG_14

Radius r of Curvature of the Thickness-
Reducing Portion of the Ceramic Member